# EUROPEAN PATENT SPECIFICATION

(11) **EP 4 369 315 B1**
(45) Date of publication and mention of the grant of the patent: **14.01.2026**
(21) Application number: 23207883.2
(22) Date of filing: 06.11.2023
(51) Int. Cl.: G06V 20/58

(54) **METHOD AND DEVICE FOR DETERMINING A PARKING FRAME, ELECTRONIC DEVICE, AND STORAGE MEDIUM**
VERFAHREN UND VORRICHTUNG ZUR BESTIMMUNG EINES PARKRAHMENS, ELEKTRONISCHE VORRICHTUNG UND SPEICHERMEDIUM
PROCÉDÉ ET DISPOSITIF DE DÉTERMINATION D'UN CADRE DE STATIONNEMENT, DISPOSITIF ÉLECTRONIQUE ET SUPPORT D'INFORMATIONS

(30) Priority: 10.11.2022 CN 202211410015
(43) Date of publication of application: 15.05.2024
(73) Proprietor: FSVAP Electronics (Wuhan) Co., Ltd., Wuhan (CN)
(72) Inventor: LIN, Chunfu, Xiamen, Fujian (CN); WANG, Xiaohong, Xiamen, Fujian (CN); CHEN, Qiuting, Xiamen, Fujian (CN)
(74) Representative: Casalonga

(56) References cited:
- LEE SANGHYUK ET AL: "Localization for Automatic Parking System using Interacting Multiple Model Kalman Filter with Rear-View Camera", 2018 18TH INTERNATIONAL CONFERENCE ON CONTROL, AUTOMATION AND SYSTEMS (ICCAS), INSTITUTE OF CONTROL, ROBOTICS AND SYSTEMS - ICROS, 17 October 2018 (2018-10-17), pages 135 - 140, XP033471091
- HO GI JUNG ET AL: "Uniform User Interface for Semiautomatic Parking Slot Marking Recognition", IEEE TRANSACTIONS ON VEHICULAR TECHNOLOGY, IEEE, USA, vol. 59, no. 2, 1 February 2010 (2010-02-01), pages 616 - 626, XP011283816, ISSN: 0018-9545, DOI: 10.1109/TVT.2009.2034860
- ZHANG PEIZHI ET AL: "Research on Parking Slot Tracking Algorithm Based on Fusion of Vision and Vehicle Chassis Information", INTERNATIONAL JOURNAL OF AUTOMOTIVE TECHNOLOGY, THE KOREAN SOCIETY OF AUTOMOTIVE ENGINEERS, HEIDELBERG, vol. 21, no. 3, 20 February 2020 (2020-02-20), pages 603 - 614, XP037027052, ISSN: 1229-9138, [retrieved on 20200220], DOI: 10.1007/S12239-020-0057-0

## Description

### TECHNICAL FIELD

The present disclosure relates to the technical field of smart cars, and in particular to a method for determining a parking frame, a device for determining a parking frame, an electronic device and a computer-readable storage medium.

### BACKGROUND

At present, when a vehicle automatically parks into a parking space perpendicular to the vehicle body, an around view monitor (AVM) is used to obtain an image of the parking space to construct a target parking frame, and then the vehicle parks into the target parking frame. Since the view of the AVM cannot cover the complete parking space, the AVM can only construct the target parking frame based on an obtained partial image of the parking space and a preset depth of the parking space.

However, due to a difference between the preset depth of the parking space and an actual depth of the parking space, there is an error between the target parking frame and an actual parking frame. Therefore, how to reduce the error between the target parking frame and the actual parking frame is a technical problem that needs to be solved urgently.

XP 033471091: "Localization for Automatic Parking System using Interacting Multiple Model Kalman Filter with Rear-View Camera" provides an IMM-based driven-vehicle state estimator. The model set of the IMM filter varied per number of passengers. The proposed IMM-based vehicle state estimator for automatic parking presents the best state estimation result by mixing estimation states stochastically.

### SUMMARY

In a first aspect, the present disclosure provides a method for determining a parking frame which is defined by claim 1.

In a second aspect, the present disclosure provides a device for determining a parking frame which is defined by claim 8.

In a third aspect, the present disclosure provides an electronic device which is defined by claim 11.

In a fourth aspect, the present disclosure provides a computer-readable storage medium which is defined by claim 13.

Further advantageous embodiments of the present disclosure are indicated in the dependent claims.

### BRIEF DESCRIPTION OF THE DRAWINGS

The accompanying drawings here are incorporated into the specification and constitute a part of the specification, illustrate embodiments consistent with the present disclosure, and are used together with the specification to explain the principle of the present disclosure, but do not constitute an improper limitation of the present disclosure.
FIG. 1 is a schematic diagram of a parking space provided in embodiments of the present disclosure;
FIG. 2 is a schematic diagram of an image of a parking space obtained by an AVM provided in embodiments of the present disclosure;
FIG. 3 is a schematic diagram of another image of the parking space obtained by the AVM provided in embodiments of the present disclosure;
FIG. 4 is a schematic diagram of another parking space provided in embodiments of the present disclosure;
FIG. 5 is a schematic diagram of a parking frame provided in embodiments of the present disclosure;
FIG. 6 is a schematic diagram showing a structure of a vehicle provided in embodiments of the present disclosure;
FIG. 7 is a schematic diagram of constructing a coordinate system provided in embodiments of the present disclosure;
FIG. 8 is a flowchart of a method for determining a parking frame provided in embodiments of the present disclosure;
FIG. 9 is a schematic diagram of an image captured by an electronic rear-view mirror provided in embodiments of the present disclosure;
FIG. 10 is a schematic diagram of a side parking line provided in embodiments of the present disclosure;
FIG. 11 is a flowchart of another method for determining a parking frame provided in embodiments of the present disclosure;
FIG. 12 is a schematic diagram of correcting near end points provided in embodiments of the present disclosure;
FIG. 13 is a schematic diagram of a parking pose provided in embodiments of the present disclosure;
FIG. 14 is a flowchart of yet another method for determining a parking frame provided in embodiments of the present disclosure;
FIG. 15 is a flowchart of yet another method for determining a parking frame provided in embodiments of the present disclosure;
FIG. 16 is a flowchart of yet another method for determining a parking frame provided in embodiments of the present disclosure;
FIG. 17 is a flowchart of yet another method for determining a parking frame provided in embodiments of the present disclosure;
FIG. 18 is a schematic diagram showing a structure of a device for determining a parking frame provided in embodiments of the present disclosure; and
FIG. 19 is a schematic diagram showing a structure of an electronic device provided in embodiments of the present disclosure.

### DETAILED DESCRIPTION

In order to enable ordinary persons in the art to better understand the technical solutions of the present disclosure, the technical solutions in the embodiments of the present disclosure will be described clearly and completely below with reference to the accompanying drawings.

It will be noted that, the terms such as "first" and "second" in the specification and claims of the present disclosure and the above drawings are used to distinguish similar objects, but not necessarily used to describe a specific order or sequence. It should be understood that the terms used in this way can be interchanged in appropriate cases, so that the embodiments of the present disclosure described herein can be implemented in a sequence other than those illustrated or described herein. The implementations described in the following exemplary embodiments do not represent all implementations consistent with the present disclosure. On the contrary, they are merely examples of devices and methods consistent with some aspects of the present disclosure as detailed in the attached claims.

The phrase "A and/or B" includes the following three combinations: only A, only B, and a combination of A and B.

As used herein, depending on the context, the term "if" is optionally construed as "when", "in a case where", "in response to determining" or "in response to detecting". Similarly, depending on the context, the phrase "if it is determined" or "if [a stated condition or event] is detected" is optionally construed as "in a case where it is determined", "in response to determining", "in a case where [the stated condition or event] is detected", or "in response to detecting [the stated condition or event]".

The use of "applicable to" or "used to" herein indicates an open and inclusive expression, which does not exclude devices that are applicable to or used to perform additional tasks or steps.

Before introducing the solutions provided in the present disclosure in detail, relevant elements, application scenarios, and implementation environment involved in the present disclosure are briefly introduced.

Firstly, the relevant elements involved in the present disclosure are briefly introduced.

World coordinate system, which is the absolute coordinate system of the system. Before the user coordinate system is established, coordinates of all points on an image are determined based on the origin of the world coordinate system, so as to determine their respective positions. Alternatively, the reference coordinate system X_{w}-Y_{w}-Z_{w} is set as the world coordinate system, and coordinates (x_{w}, y_{w}, z_{w}) are the coordinates of the spatial point P in the world coordinate system. Coordinates (u, v) is the coordinates of the point P in the Cartesian coordinate system of the image.

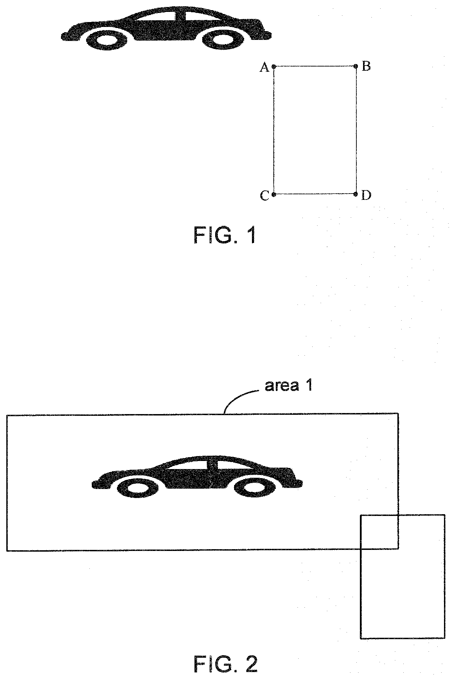

Near end point, which is an end point in the parking frame (i.e., the parking space) that is closer to the vehicle. For example, both end point A and end point B in FIG. 1 are near end points.

Far end point, which is an end point in the parking frame (i.e., the parking space) that is farther from the vehicle. For example, both end point C and end point D in FIG. 1 are far end points.

In addition, as shown in FIG. 1, a length of the line segment AB is a width of the parking space, and a length of the line segment AC is a length or depth of the parking space.

In some embodiments, a distance between an end point (i.e., the near end point or the far end point) of the parking space and the vehicle refers to a vertical distance between an extension line of the end point of the parking space along the width direction of the parking space and the vehicle, and is not a straight-line distance between the end point of the parking space and the vehicle. Based on the distance between the vehicle and the near end point of the parking space, and the distance between the near end point of the parking space and the far end point of the parking space, a parking travel area can be determined.

Around view monitor (AVM), which is a system that uses multiple (usually four) ultra-large wide-angle fisheye lenses to capture images, and performs distortion correction and splicing on the captured images through special algorithms to form a panoramic image around the object.

In practical applications, the AVM can obtain a field of view within 3 meters of the vehicle's vicinity.

Electronic rear-view mirror, which is a product combination based on a camera and a display. The electronic rear-view mirror can enhance the driver's visual perception of the vehicle's surroundings and side-rear, and further enhance driving safety and comfort.

Secondly, the application scenarios involved in the present disclosure are briefly introduced.

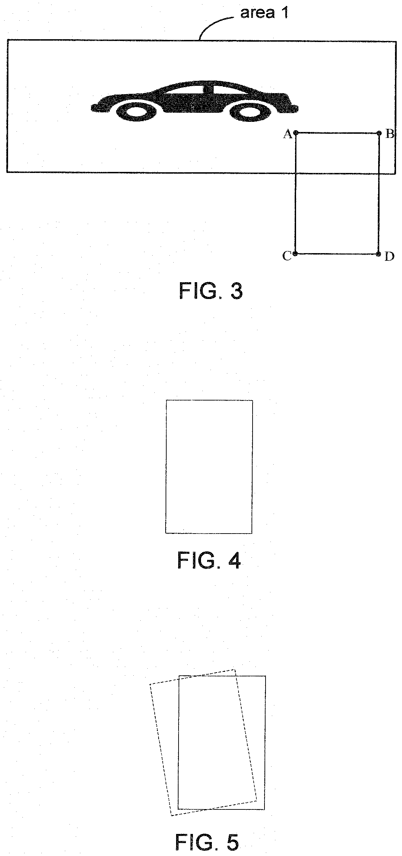

At present, when a vehicle automatically parks into a parking space perpendicular to the vehicle body, the AVM is used to obtain an image of the parking space to construct a target parking frame, and then the vehicle parks into the target parking frame. For example, as show in FIG. 2, the AVM recognizes parking lines of the parking frame (parking space) and the near end point(s) of the parking frame. Since the field of view of the AVM (for example, area 1 in FIG. 2 is the field of view of the AVM) cannot cover the complete parking space, the AVM can only obtain a partial image of the parking space. On this basis, the vehicle constructs the target parking frame based on the partial image of the parking space and a preset fixed depth value of the parking space. For example, as shown in FIG. 3, the AVM recognizes two near end points of the parking frame and a portion of a parking line of the parking frame, and constructs the target parking frame based on the two near end points, the portion of the parking line, the preset fixed depth value, and a preset model.

However, due to a difference between the preset fixed depth value and an actual depth value of the parking space, there is an error between the target parking frame and an actual parking frame. Therefore, how to reduce the error between the target parking frame and the actual parking frame is a technical problem that needs to be solved urgently.

For example, as shown in FIGS. 4 and 5, FIG. 4 is an actual parking frame, and FIG. 5 is the comparison between the actual parking frame and the target parking frame that is constructed based on the image of the parking space obtained by the AVM (in FIG. 5, the solid line frame represents the actual parking frame, the dotted line frame represents the target parking frame), it can be seen that there is the error between the actual parking frame and the target parking frame constructed by the vehicle based on the partial image of the parking space and the preset fixed depth value.

In view of the above problem, the present disclosure provides a method for determining a parking frame, which is used for determining the parking frame of a parking space for a vehicle. The vehicle includes the electronic rear-view mirror and the AVM. The method includes: determining first far end coordinates based on a first image captured by the electronic rear-view mirror, the first far end coordinates being coordinates of a target far end point of the parking space in the first image; obtaining second far end coordinates of the target far end point in a reference parking frame, the reference parking frame being generated based on a second image obtained by the AVM, and the second image including two near end points of the parking space; adjusting the second far end coordinates according to the first far end coordinates to obtain third far end coordinates; and determining a target parking frame of the parking space based on the third far end coordinates and coordinates of the two near end points of the reference parking frame. In this way, the vehicle obtains the real far end point of the parking space through the electronic rear-view mirror, and corrects the far end point of the reference parking frame based on the coordinates of the real far end point. And then, the vehicle determines the target parking frame based on the corrected coordinates of the far end point and the coordinates of the two near end points. It can be seen that the target parking frame in the technical solution of the present disclosure is generated based on the coordinates of the three end points of the parking space obtained by the vehicle, which improves the accuracy of the position of the target parking frame and reduces the error between the target parking frame and the actual parking frame.

Finally, the implementation environment (implementation architecture) involved in the method provided in the present disclosure is briefly introduced.

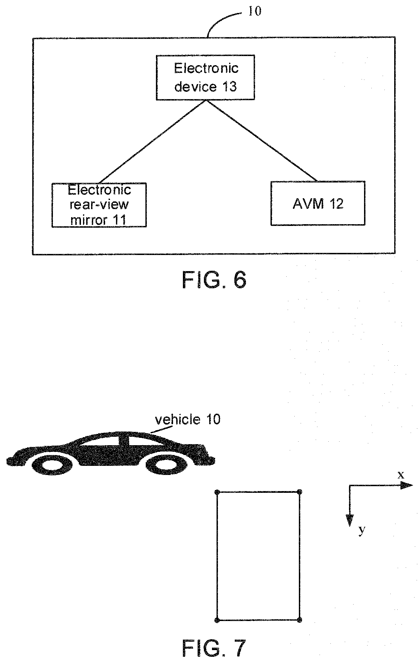

FIG. 6 shows a schematic diagram of a structure of the vehicle provided in embodiments of the present disclosure. The vehicle 10 may include the electronic rear-view mirror 11, the AVM 12 and an electronic device 13. The electronic device 13 is connected to the electronic rear-view mirror 11 and the AVM 12.

The electronic rear-view mirror 11 is used to capture an image of the side-rear of the vehicle 10 and send the image to the electronic device 13 after the vehicle 10 starts the electronic device 13. The electronic rear-view mirror 11 may be an electronic rear-view mirror system.

The AVM 12 is used to obtain an image around the vehicle 10 and send the image to the electronic device 13 after the vehicle 10 starts the electronic device 13.

The electronic device 13 is used to recognize the image after receiving the image sent by the electronic rear-view mirror 11, so as to obtain the far end point and the coordinates corresponding to the far end point from the image.

The electronic device 13 is further used to: recognize the image after receiving the image sent by the AVM 12, determine the coordinates of the two near end points based on the image after determining that the image includes the two near end points of the parking space, and construct the reference parking frame based on the coordinates of the two near end points and the preset fixed depth value.

The electronic device 13 is further used to determine the target parking frame based on the image sent by the AVM 12 and the image sent by the electronic rear-view mirror 11.

The electronic device 13 includes a parking system. The parking system is used to, based on the target parking frame, control the vehicle 10 to park into the target parking frame.

It should be noted that the preset fixed depth value is set in the parking system in advance by the operation and maintenance personnel, and the preset fixed depth value may be a value set by the operation and maintenance personnel according to different areas. The preset fixed depth value may be, for example, 6m or 5.5m, which is not limited in the embodiments of the present disclosure.

In some embodiments, the coordinates in the embodiments of the present disclosure are coordinates in the world coordinate system. As shown in FIG. 7, a center of a rear axle of the vehicle 10 when starting the parking system is used as the origin of the world coordinate system, a line perpendicular to the vehicle body is used as the vertical axis y, and a line parallel to the vehicle body is used as the horizontal axes x.

In some embodiments, in order to reduce the computation of the parking system, the embodiments of the present disclosure further provide a system for determining a parking frame. The system for determining the parking frame includes a vehicle and a server. The vehicle includes an electronic rear-view mirror system, an AVM, and a parking system.

After the parking system is started, the electronic rear-view mirror system recognizes a captured image, and reports the captured image to the server in a case where the captured image includes far end point(s).

After the parking system is started, the AVM recognizes an obtained image, and reports the obtained image to the service in a case where the obtained image includes two near end points.

After receiving the images reported by the electronic rear-view mirror system and the AVM, the server processes the reported images to determine target parking frame data. On this basis, the server sends the target parking frame data to the parking system.

For convenience of understanding, the method for determining the parking frame provided in the embodiments of the present disclosure will be introduced in details below in combination with the accompanying drawings.

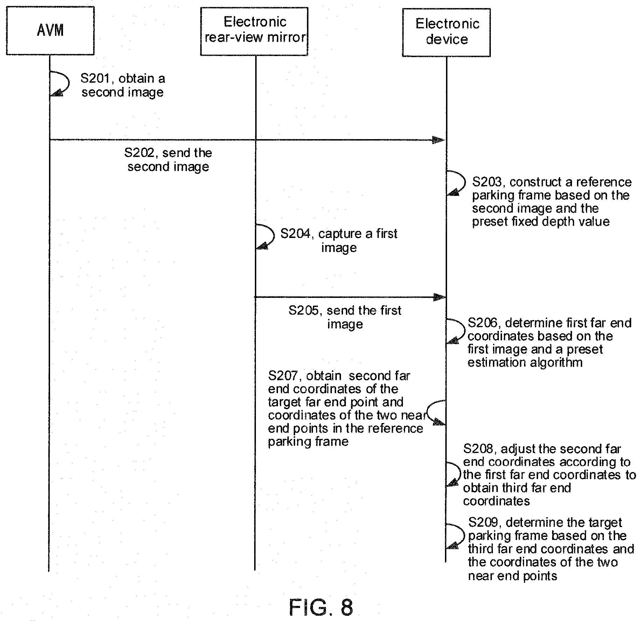

In order to reduce the error between the target parking frame and the actual parking frame, the method for determining the parking frame provided in the embodiments of the present disclosure is used to determine the parking frame for a vehicle, and the vehicle includes an electronic rear-view mirror and an AVM. As shown in FIG. 8, the method includes S201 to S209.

In S201, the AVM obtains a second image.

The second image includes two near end points of the parking space.

As a possible implementation, the AVM obtains an image around the vehicle in real time and recognizes the image in a case where the vehicle starts the parking system. The AVM determines that the image is the second image including the two near end points in a case of determining that the image includes the two near end points.

In another case, the AVM obtains an image around the vehicle and sends the image to the electronic device when the parking system of the vehicle is started. Accordingly, after receiving the image sent by the AVM, the electronic device recognizes the image, and determines that the image is the second image including the two near end points in the case of determining that the image includes the two near end points.

In some embodiments, the second image further includes a portion of a parking line of the parking space.

In S202, the AVM sends the second image to the electronic device. Accordingly, the electronic device receives the second image sent by the AVM.

In S203, the electronic device constructs a reference parking frame based on the second image and the preset fixed depth value.

As a possible implementation, the electronic device determines the coordinates of the two near end points based on the positions of the two near end points in the second image and a preset depth estimation algorithm. Then, the electronic device constructs the reference parking frame in the world coordinate system based on the coordinates of the two near end points, the portion of the parking line, and the preset fixed depth value.

In addition, the electronic device may determine a reference parking pose of the vehicle in the reference parking frame. The reference parking pose includes reference parking coordinates and a reference parking angle.

It can be understood that, the electronic device uses the center of the rear axle of the vehicle when the parking system of the vehicle is started as the origin of the world coordinate system, and the coordinates of the two near end points are determined based on the origin.

It should be noted that the preset depth estimation algorithm is set in the electronic device in advance by operation and maintenance personnel.

In S204, the electronic rear-view mirror captures a first image.

The first image includes a target far end point. The first image further includes a side parking line of the parking space.

As a possible implementation, when the parking system of the vehicle is started, the electronic rear-view mirror captures an image of the side-rear of the vehicle, and recognizes the image, and determines that the image is the first image in a case where the image includes the target far end point.

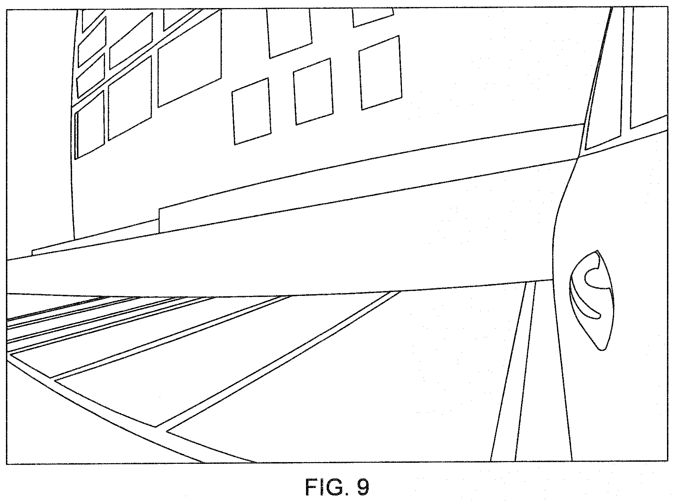

For example, as shown in FIG. 9, FIG. 9 is the first image captured by the electronic rear-view mirror.

In another case, the electronic rear-view mirror captures the image of the side-rear of the vehicle, and sends the image of the side-rear of the vehicle to the electronic device. Accordingly, after receiving the image sent by the electronic rear-view mirror, the electronic device recognizes the image, and determines that the image is the first image including the target far end point in the case where the image includes the target far end point.

It can be understood that during a process of parking the vehicle, the electronic rear-view mirror can obtain the far end point before the AVM obtains the far end point. In the process of parking the vehicle, the electronic rear-view mirror first obtain one of the two far end points, and determines the obtained far end point as the target far end point. For example, when the vehicle is located on a left side of the parking frame and parked into the parking frame, the electronic rear-view mirror can first capture an image including a left far end point of the parking frame, and determine the left far end point as the target far end point. In this way, it avoids a problem that the reference parking frame is adjusted based on the far end point obtained by the AVM when the vehicle is about to park into the parking space and then the position of the vehicle is adjusted again.

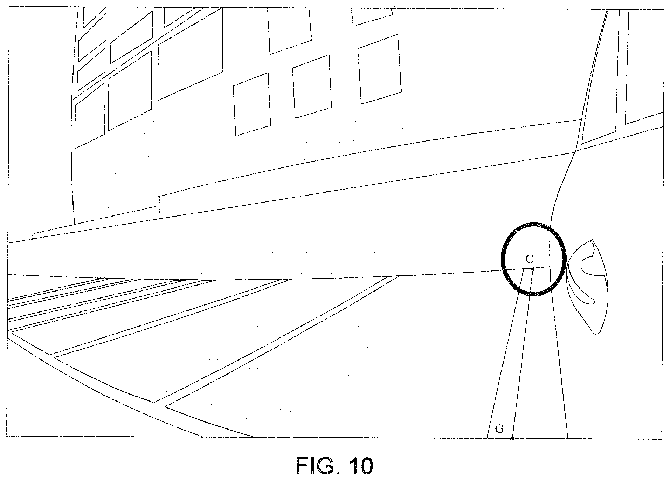

For example, as shown in FIG. 10, when the vehicle is located on a right side of the parking frame and parked into the parking frame, the right far end point C of the parking frame and a portion CG of the right parking line of the parking frame are obtained first.

In S205, the electronic rear-view mirror sends the first image to the electronic device. Accordingly, the electronic device receives the first image sent by the electronic rear-view mirror.

In S206, the electronic device determines first far end coordinates based on the first image and a preset estimation algorithm.

The first far end coordinates are coordinates of the target far end point of the first image.

As a possible implementation, the electronic device determines the coordinates of the target far end point in the world coordinate system based on the first image and the preset estimation algorithm, so as to obtain the first far end coordinates.

In some embodiments, the position of the center of the rear axle when the parking system of the vehicle is started is used as the origin of the world coordinate system, and the real-time position of the vehicle relative to the origin of the world coordinate system is calculated through the real-time wheel speed data and the rotation angle data of the wheel. The rotation angle data may be calculated through the rotation angle of the steering wheel.

In S207, the electronic device obtains second far end coordinates of the target far end point and the coordinates of the two near end points of the reference parking frame.

In S208, the electronic device adjusts the second far end coordinates according to the first far end coordinates to obtain third far end coordinates.

As a possible implementation, the electronic device obtains a first abscissa value of the first far end coordinates, a second abscissa value of the second far end coordinates, and an ordinate value of the first far end coordinates. The ordinate value is used to characterize a length of the parking space. On this basis, the electronic device adds a value obtained by multiplying the first abscissa value by a preset first weight coefficient and a value obtained by multiplying the second abscissa value by a preset second weight coefficient to obtain the third abscissa value. The third far end coordinates are determined based on the third abscissa value and the ordinate value.

For example, the preset first weight coefficient is 0.9, the preset second weight coefficient is 0.1, the first abscissa value of the first far end coordinates is x1, the second abscissa value of the second far end coordinates is x2, and the ordinate value of the first far end coordinates is y1; and the third far end coordinates are (0.9*x1+0.1*x2, y1).

In some embodiments, the preset first weight coefficient plus the preset second weight coefficient is equal to 1. The preset first weight coefficient may be greater than the preset second weight coefficient. Of course, the preset first weight coefficient may also be less than or equal to the preset second weight coefficient. The embodiments of the present disclosure do not limit values of the preset first weight coefficient and the preset second weight coefficient, and sizes of the preset first weight coefficient and the preset second weight coefficient may be adjusted by the operation and maintenance personnel according to different situations.

In S209, the electronic device determines the target parking frame based on the third far end coordinates and the coordinates of the two near end points.

As a possible implementation, the electronic device determines coordinates of another far end point according to the coordinates of the target far end point, the coordinates of the two near end points and a rectangle constraint algorithm, and then obtains the target parking frame.

In the method for determining the parking frame provided in the embodiments of the present disclosure, the vehicle obtains the real far end point of the parking space through the electronic rear-view mirror, and corrects the far end point of the reference parking frame based on the coordinates of the real far end point; and the target parking frame is determined based on the coordinates of the corrected far end point and the coordinates of the two near end points. It can be seen that the target parking frame in the technical solution of the present disclosure is generated based on the coordinates of the three end points of the parking space obtained by the vehicle, which improves the accuracy of the position of the target parking frame and reduces the error between the target parking frame and the actual parking frame.

In addition, by adopting the technical solution of the embodiments of the present disclosure, the reference parking frame can be adjusted in time based on the image captured by the electronic rear-view mirror, so as to avoid the problem that the reference parking frame is adjusted after the vehicle parks into the parking space and then the position of the vehicle is adjusted again.

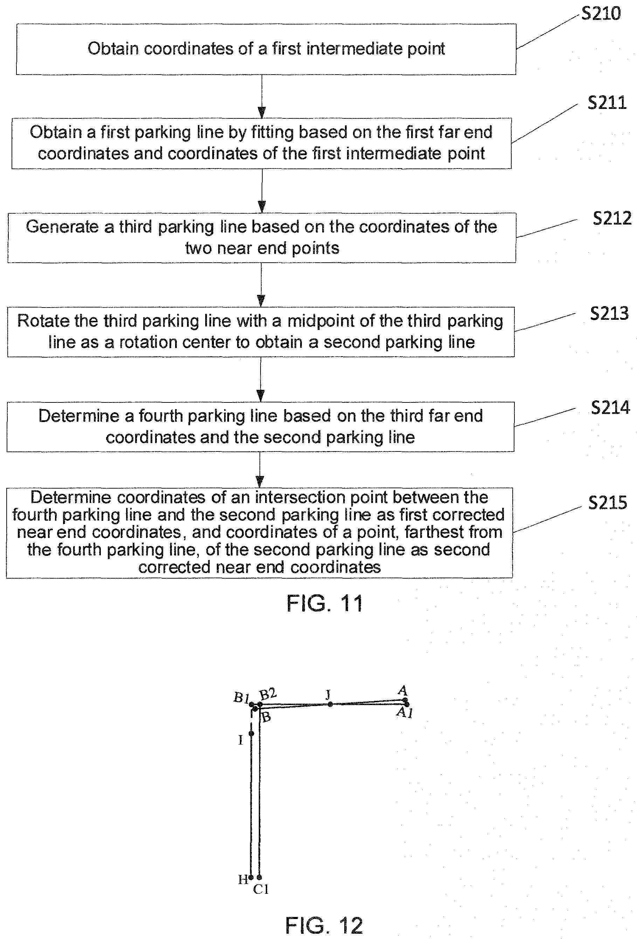

In a design, in order to reduce the error between the target parking frame and the actual parking frame, the first image further includes a side parking line of the parking space, and the side parking line is a parking line between the target far end point and a corresponding near end point. As shown in FIG. 11, the method for determining the parking frame provided in the embodiment of the present disclosure further includes S210 to S215.

In S210, the electronic device obtains coordinates of a first intermediate point.

The first intermediate point is any point on the side parking line except the target far end point.

In S211, the electronic device obtains a first parking line by fitting based on the first far end coordinates and coordinates of the first intermediate point.

As a possible implementation, the electronic device obtains the first parking line by fitting based on the first far end coordinates, the coordinates of the first intermediate point, and a preset fitting algorithm.

For example, as shown in FIG. 12, the target far end point is H, the first intermediate point is I, and the first parking line is line segment HI.

In S212, the electronic device generates a third parking line based on the coordinates of the two near end points.

As a possible implementation, the electronic device generates a line segment based on the coordinates of the two near end points to obtain the third parking line.

For example, as shown in FIG. 12, the first near end point is A, the second near end point is B, and the third parking line is line segment AB.

In S213, the electronic device rotates the third parking line with a midpoint of the third parking line as a rotation center to obtain a second parking line.

The second parking line is perpendicular to the first parking line.

For example, as shown in FIG. 12, the rotation center is point J, the line segment AB is rotated around point J, and the line segment A1B1 is obtained as the second parking line.

In another case, the electronic device determines a length between the two near end points based on the coordinates of the two near end points, and fits a line segment perpendicular to the first parking line based on the length between the two near end points, so as to obtain the second parking line.

In S214, the electronic device determines a fourth parking line based on the third far end coordinates and the second parking line.

The fourth parking line is perpendicular to the second parking line.

As a possible implementation, the electronic device uses a point corresponding to the third far end coordinates as a starting point to make a line segment perpendicular to the second parking line, so as to obtain the fourth parking line.

For example, referring to FIG. 12, the point corresponding to the third far end coordinates is C1, and the fourth parking line is C1B2.

In S215, the electronic device determines coordinates of an intersection point between the fourth parking line and the second parking line as first corrected near end coordinates, and determines coordinates of a point, farthest from the fourth parking line, of the second parking line as second corrected near end coordinates.

For example, referring to FIG. 12, the intersection point between the fourth parking line and the second parking line is B2, and the first corrected near end coordinates are coordinates corresponding to point B2. The point, farthest from the fourth parking line, of the second parking line is A1, and the second corrected near end coordinates are coordinates corresponding to point A1.

On this basis, determining, by the electronic device, the target parking frame based on the third far end coordinates and the coordinates of the two near end points includes S216.

In S216, the electronic device determines the target parking frame based on the third far end coordinates, the first corrected near end coordinates, and second corrected near end coordinates.

In a design, in order to improve the accuracy of the parking position, the method for determining the parking frame provided in the embodiments of the present disclosure further includes S217 to S221.

In S217, the electronic device obtains a reference parking pose of the vehicle in the reference parking frame and a target parking pose of the vehicle in the target parking frame.

The reference parking pose includes reference parking coordinates and a reference parking angle, and the target parking pose includes target parking coordinates and a target parking angle.

As a possible implementation, after determining the reference parking frame, the electronic device generates a reference parking path based on a path planning algorithm to obtain the reference parking pose of the vehicle. In addition, after determining the target parking frame, the electronic device generates a target parking path based on a path planning algorithm to obtain the target parking pose of the vehicle. Based on this, the electronic device obtains the reference parking pose of the vehicle in the reference parking frame and the target parking pose of the vehicle in the target parking frame.

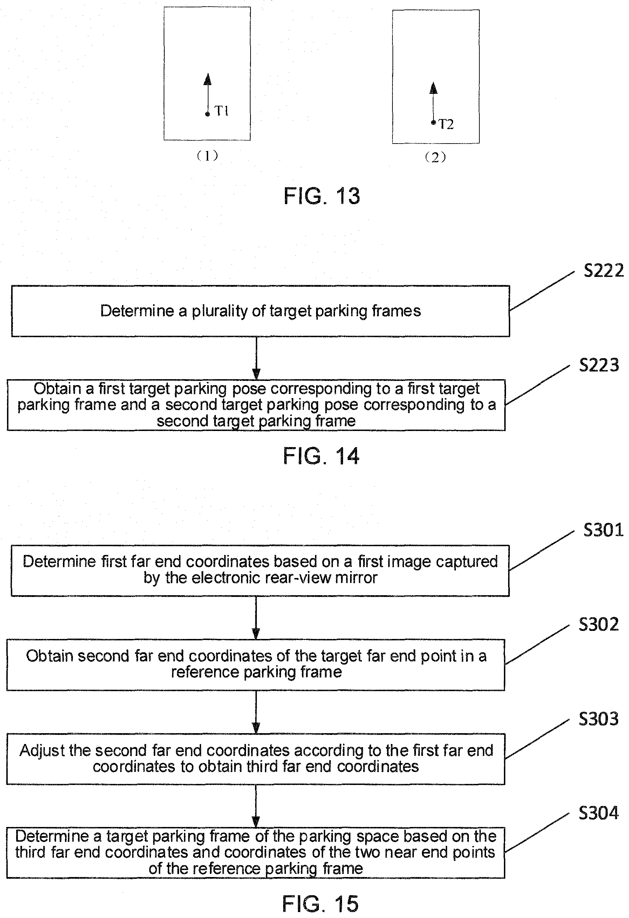

For example, as shown in FIG. 13, in (1) of FIG. 13, T1 is the reference parking pose, and in (2) of FIG. 13, T2 is the target parking pose.

In some embodiments, the parking angle is an included angle between the body of the vehicle and the horizontal axis or the vertical axis in the world coordinate system.

In S218, the electronic device calculates a first distance between the reference parking coordinates and the target parking coordinates.

In S219, the electronic device calculates a first angle difference between the reference parking angle and the target parking angle.

In S220, the electronic device determines whether the first distance is less than or equal to a first distance threshold, and whether the first angle difference is less than or equal to a first angle threshold.

In S221, the electronic device controls the vehicle to park into the target parking frame in a case where the first distance is less than or equal to the first distance threshold and the first angle difference is less than or equal to the first angle threshold.

In another case, in a case where the first distance is greater than the first distance threshold, and/or the first angle difference is greater than the first angle threshold, the electronic device generates a new target parking frame, and compares the parking pose of the new target parking frame and the parking pose of the reference parking frame. In this way, until the new target parking frame meets the above preset condition (that is, the first distance is less than or equal to the first distance threshold, and the first angle difference is less than or equal to the first angle threshold).

In some embodiments, if the target parking frame does not meet the above condition, the electronic device controls the vehicle to park into the newly generated target parking frame after determining that none of the preset number of target parking frames meet the above preset condition.

In some embodiments, if the target parking frame does not meet the above condition, the electronic device controls the vehicle to park into any one of target parking frames after determining that none of the preset number of target parking frames meet the above preset condition.

For example, the preset number may be 3 or 5, which is not limited in the embodiments of the present disclosure, and may be set by the operation and maintenance personnel according to actual conditions.

It can be understood that, after determining the reference parking frame, every time the electronic device generates the target parking frame, it compares the first distance with the first distance threshold and the first angle difference with the first angle threshold; and in the case where the first distance and the first angle difference meet the preset condition (that is, the first distance is less than or equal to the first distance threshold, and the first angle difference is less than or equal to the first angle threshold), the electronic device no longer generates the target parking frame during the subsequent parking process. The electronic device controls the vehicle parking based on the target parking frame meeting the preset condition.

In a design, in order to improve the accuracy of the parking position, the method for determining the parking frame provided in the embodiments of the present disclosure further includes S222 to S223.

In S222, the electronic device determines a plurality of target parking frames.

As a possible implementation, the electronic device determines the plurality of target parking frames based on images reported by the electronic rear-view mirror and the AVM at different times during the parking process of the vehicle.

In S223, the electronic device obtains a first target parking pose corresponding to a first target parking frame and a second target parking pose corresponding to a second target parking frame.

The first target parking frame and the second target parking frame are different target parking frames in the plurality of target parking frames.

As a possible implementation, every time the electronic device obtains a target parking frame, it generates a target parking path based on a path planning algorithm to obtain a target parking pose corresponding to the target parking frame. On this basis, the electronic device determines the first target parking pose corresponding to the first target parking frame from the plurality of target parking frames, and the first target parking frame is any target parking frame in the plurality of target parking frames; and the electronic device determines the second target parking pose corresponding to the second target parking frame from the plurality of target parking frames, and the second target parking frame is any target parking frame except the first target parking frame in the plurality of target parking frames.

Then, the electronic device obtains first target parking coordinates and a first target parking angle of the first target parking pose, and second target parking coordinates and a second target parking angle of the second target parking pose.

As another possible implementation, the electronic device obtains the first target parking frame and the second target parking frame, and generates a first target parking path corresponding to the first target parking frame and a second target parking path corresponding to the second target parking frame based on the path planning algorithm. Then, the electronic device obtains the first target parking coordinates and the first target parking angle of the first target parking pose, and the second target parking coordinates and the second target parking angle of the second target parking pose.

After determining the reference parking frame, the electronic device generates the plurality of target parking frames, and compares a second distance between parking coordinates of two target parking poses corresponding to any two target parking frames in the plurality of target parking frames with a second distance threshold, and a second angle difference between parking angles of the two target parking poses corresponding to the two target parking frames with a second angle threshold. On this basis, in a case where the second distance is less than or equal to the second distance threshold, and the second angle difference is less than or equal to the second angle threshold, the electronic device will no longer generate the target parking frame during the subsequent parking process. The electronic device controls the vehicle to park into any one of the plurality of target parking frames.

It should be noted that, the first distance and the second distance may be the same or different, the first angle difference and the second angle difference may be the same or different, the first distance threshold and the second distance threshold may be the same or different, and the first angle threshold and the second angle threshold may be the same or different, which are not limited in the embodiments of the present disclosure.

In another case, after determining the reference parking frame and the reference parking path, the electronic device generates the plurality of target parking frames, and generates a third target parking path corresponding to a third target parking frame based on the path planning algorithm. The third target parking frame is any one of the plurality of target parking frames. The electronic device obtains reference parking coordinates and a reference parking angle of the vehicle in the reference parking frame, and obtains third target parking coordinates and a third target parking angle of the vehicle in the third target parking frame.

On this basis, the electronic device calculates a third distance between the reference parking coordinates and the third target parking coordinates, and calculates a third angle difference between the reference parking angle and the third target parking angle. Then, the electronic device determines whether the third distance is less than or equal to a third distance threshold, and whether the third angle difference is less than or equal to a third angle threshold; and in a case where the third distance is less than or equal to the third distance threshold, and the third angle difference is less than or equal to the third angle threshold, the electronic device controls the vehicle to park into the third target parking frame.

In a case where the third distance is greater than the third distance threshold, and/or the third angle difference is greater than the third angle threshold, the electronic device compares a target parking pose corresponding to a fourth target parking frame with the reference parking pose corresponding to the reference parking frame. The fourth target parking frame is a target parking frame except the third target parking frame in the plurality of target parking frames.

In some embodiments, the electronic device generates a fifth target parking frame, and compares a target parking pose corresponding to the fifth target parking frame with the reference parking pose corresponding to the reference parking frame.

In a design, in order to reduce the error between the target parking frame and the actual parking frame, as shown in FIG. 15, embodiments of the present disclosure provide a method for determining a parking frame, used for determining the parking frame of a parking space for a vehicle, and the vehicle includes an electronic rear-view mirror and an around view monitor (AVM). The method includes S301 to S304.

In S301, the electronic device determines first far end coordinates based on a first image captured by the electronic rear-view mirror.

The first far end coordinates are coordinates of a target far end point of the parking space in the first image.

In S302, the electronic device obtains second far end coordinates of the target far end point in a reference parking frame.

The reference parking frame is generated based on a second image obtained by the AVM, and the second image includes two near end points of the parking space.

In S303, the electronic device adjusts the second far end coordinates according to the first far end coordinates to obtain third far end coordinates.

In S304, the electronic device determines a target parking frame of the parking space based on the third far end coordinates and coordinates of the two near end points of the reference parking frame.

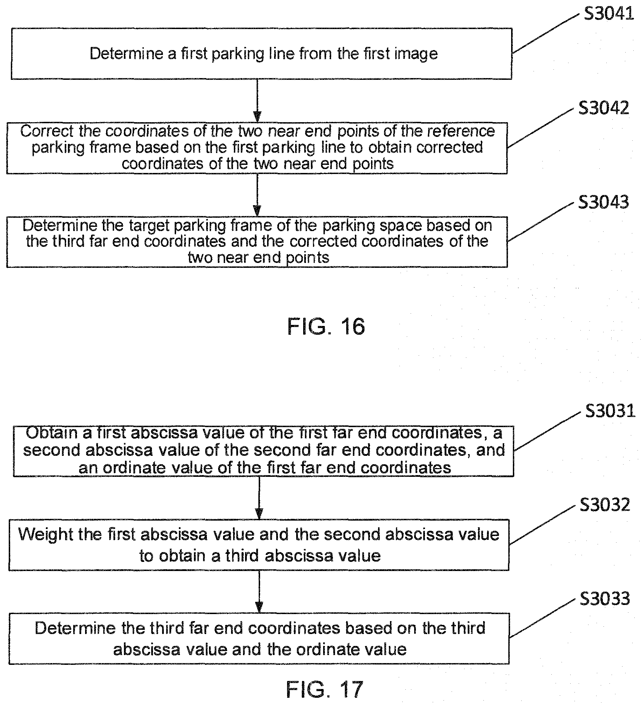

In some embodiments, as shown in FIG. 16, S304 includes S3041 to S3043.

In S3041, the electronic device determines a first parking line from the first image.

The first parking line is a side parking line including the target far end point.

In S3042, the electronic device corrects the coordinates of the two near end points of the reference parking frame based on the first parking line to obtain corrected coordinates of the two near end points.

A second parking line formed by the corrected coordinates of the two near end points is perpendicular to the first parking line.

In S3043, the electronic device determines the target parking frame of the parking space based on the third far end coordinates and the corrected coordinates of the two near end points.

In a design, in order to obtain accurate coordinates of the near end point, S3042 includes S401 to S403.

In S401, the electronic device corrects a third parking line according to the first parking line to obtain the second parking line.

The third parking line is a line segment including the two near end points of the reference parking frame.

In S402, the electronic device determines corrected coordinates of a first near end point of the two near end points from the second parking line based on the third far end coordinates.

A line segment formed by the corrected coordinates of the first near end point and the third far end coordinates is perpendicular to the second parking line.

In S403, the electronic device determines coordinates of a near end point, farthest from the first parking line, of the second parking line as corrected coordinates of a second near end point of the two near end points.

It can be understood that, since a connection line between the two near end points of the parking space will become blurred in a long-term loss process, the technical solution provided in the embodiments of the present disclosure can correct positions of the two near end points in the world coordinate system, so that the accurate coordinates of the near end point can be obtained, and thus the error between the target parking frame and the actual parking frame can be reduced.

In some embodiments, as shown in FIG. 17, S303 includes S3031 to S3033.

In S3031, the electronic device obtains a first abscissa value of the first far end coordinates, a second abscissa value of the second far end coordinates, and an ordinate value of the first far end coordinates.

The ordinate value is used to characterize a length of the parking space.

In S3032, the electronic device weights the first abscissa value and the second abscissa value to obtain a third abscissa value.

For example, a weight corresponding to the first abscissa value is greater than a weight corresponding to the second abscissa value.

In S3033, the electronic device determines the third far end coordinates based on the third abscissa value and the ordinate value.

In a design, in order to improve the accuracy of the parking position of the vehicle, the method for determining the parking frame provided in the embodiments of the present disclosure further includes S305 to S306.

In S305, the electronic device obtains a parking pose of the vehicle in the reference parking frame and a parking pose of the vehicle in the target parking frame.

In S306, the electronic device controls the vehicle to park into the target parking frame in a case where the parking pose of the vehicle in the reference parking frame and the parking pose of the vehicle in the target parking frame meet a preset condition.

In a design, the parking pose of the vehicle in the reference parking frame and the parking pose of the vehicle in the target parking frame both include a parking angle and parking coordinates, and the preset condition includes a distance between parking coordinates of the two parking poses being less than or equal to a preset distance threshold, and an angle difference between parking angles of the two parking poses being less than or equal to a preset angle threshold.

In order to improve the accuracy of the parking position of the vehicle, the method for determining the parking frame provided in the embodiments of the present disclosure further includes S307 to S309.

In S307, the electronic device determines a plurality of target parking frames.

In S308, the electronic device obtains a parking pose of the vehicle in a first target parking frame and a parking pose of the vehicle in a second target parking frame.

The first target parking frame and the second target parking frame are different target parking frames in the plurality of target parking frames.

In S309, the electronic device controls the vehicle to park into a third target parking frame in a case where the parking pose of the vehicle in the first target parking frame and the parking pose of the vehicle in the second target parking frame meet a preset condition.

The third target parking frame is any one of the plurality of target parking frames.

In a design, the parking pose of the vehicle in the first target parking frame and the parking pose of the vehicle in the second target parking frame both include a parking angle and parking coordinates, and the preset condition includes a distance between parking coordinates of the two parking poses being less than or equal to a preset distance threshold, and an angle difference between parking angles of the two parking poses being less than or equal to a preset angle threshold.

The foregoing mainly introduces the solutions provided in the embodiments of the present disclosure from perspective of method. In order to achieve the above functions, the electronic device includes corresponding hardware structures and/or software modules for performing various functions. A person skilled in the art will be easy to realize that by combining units and steps of the examples described in the embodiments disclosed herein, the solution of the present disclosure can be implemented through hardware or a combination of hardware and computer software. Whether a certain function is performed through the hardware or the computer software-driven hardware depends on the specific application and restrictive conditions on design of the technical solution. A skilled person may use different methods for each specific application to implement the described functions, but such implementation should not be considered beyond the scope of the present disclosure.

Exemplary functional modules may be divided for the electronic device according to the above method. For example, the electronic device may include functional modules corresponding to functional divisions. Two or more functions may also be integrated into a processing module. The integrated module may be implemented in the form of hardware or software functional module. It should be noted that, the division of modules in the embodiments of the present disclosure is exemplary, and is only a division according to logical functions, and there may be other division manners in actual implementation.

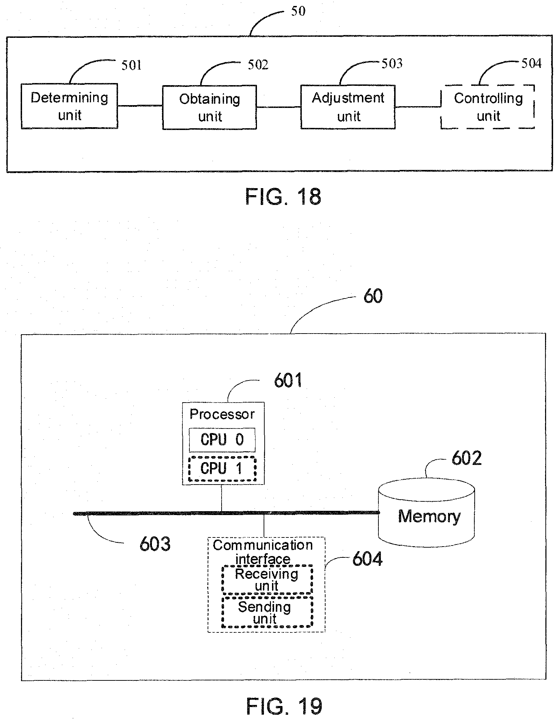

For example, embodiments of the present disclosure further provide a device for determining a parking frame, which is used for determining the parking frame of a parking space for a vehicle. The vehicle includes an electronic rear-view mirror and an around view monitor (AVM). As shown in FIG. 18, the device 50 includes a determining unit 501, an obtaining unit 502 and an adjustment unit 503.

The determining unit 501 is used to determine first far end coordinates based on a first image captured by the electronic rear-view mirror. The first far end coordinates are coordinates of a target far end point of the parking space in the first image.

The obtaining unit 502 is used to obtain second far end coordinates of the target far end point in a reference parking frame. The reference parking frame is generated based on a second image obtained by the AVM, and the second image includes two near end points of the parking space.

The adjustment unit 503 is used to adjust the second far end coordinates according to the first far end coordinates to obtain third far end coordinates. The determining unit 501 is further used to determine a target parking frame of the parking space based on the third far end coordinates and coordinates of the two near end points of the reference parking frame.

In some embodiments, the determining unit 501 is used to: determine a first parking line from the first image, the first parking line being a side parking line including the target far end point; correct, based on the first parking line, the coordinates of the two near end points of the reference parking frame to obtain corrected coordinates of the two near end points, a second parking line formed by the corrected coordinates of the two near end points being perpendicular to the first parking line; and determine the target parking frame of the parking space based on the third far end coordinates and the corrected coordinates of the two near end points.

In some embodiments, the determining unit 501 is used to: correct a third parking line according to the first parking line to obtain the second parking line, the third parking line being a line segment including the two near end points of the reference parking frame; determine, based on the third far end coordinates, corrected coordinates of a first near end point of the two near end points from the second parking line, a line segment formed by the corrected coordinates of the first near end point and the third far end coordinates being perpendicular to the second parking line; and determine coordinates of a near end point, farthest from the first parking line, of the second parking line as corrected coordinates of a second near end point of the two near end points.

In some embodiments, the adjustment unit 503 is used to: obtain a first abscissa value of the first far end coordinates, a second abscissa value of the second far end coordinates, and an ordinate value of the first far end coordinates, the ordinate value being used to characterize a length of the parking space; weight the first abscissa value and the second abscissa value to obtain a third abscissa value, a weight corresponding to the first abscissa value being greater than a weight corresponding to the second abscissa value; and determine the third far end coordinates based on the third abscissa value and the ordinate value.

In some embodiments, as shown in FIG. 18, the device 50 for determining the parking frame further includes a controlling unit 504.

The obtaining unit 502 is further used to obtain a parking pose of the vehicle in the reference parking frame and a parking pose of the vehicle in the target parking frame.

The controlling unit 504 is used to control the vehicle to park into the target parking frame in a case where the parking pose of the vehicle in the reference parking frame and the parking pose of the vehicle in the target parking frame meet a preset condition.

In some embodiments, the parking pose of the vehicle in the reference parking frame and the parking pose of the vehicle in the target parking frame both include a parking angle and parking coordinates, and the preset condition includes a distance between parking coordinates of the two parking poses being less than or equal to a preset distance threshold, and an angle difference between parking angles of the two parking poses being less than or equal to a preset angle threshold.

In some embodiments, the determining unit 501 is further used to determine a plurality of target parking frames.

The obtaining unit 502 is further used to obtain a parking pose of the vehicle in a first target parking frame and a parking pose of the vehicle in a second target parking frame. The first target parking frame and the second target parking frame are different target parking frames in the plurality of target parking frames.

The controlling unit 504 is further used to control the vehicle to park into a third target parking frame in a case where the parking pose of the vehicle in the first target parking frame and the parking pose of the vehicle in the second target parking frame meet a preset condition. The third target parking frame is any one of the plurality of target parking frames.

In some embodiments, the parking pose of the vehicle in the first target parking frame and the parking pose of the vehicle in the second target parking frame both include a parking angle and parking coordinates, and the preset condition includes a distance between parking coordinates of the two parking poses being less than or equal to a preset distance threshold, and an angle difference between parking angles of the two parking poses being less than or equal to a preset angle threshold.

In a case where the functions of the above-mentioned integrated units are implemented in the form of hardware, embodiments of the present disclosure provide a schematic diagram of a possible structure of the electronic device involved in the above-mentioned embodiments. As shown in FIG. 19, the electronic device 60 includes a processor 601, a memory 602 and a bus 603. The processor 601 may be connected to the memory 602 through the bus 603.

For example, the processor 601 is the control center of the electronic device, which may be a single processor, or may be a general term for a plurality of processing elements. For example, the processor 601 may be a general-purpose central processing unit (CPU), or other general-purpose processor. The general-purpose processor may be a microprocessor or any conventional processor.

As an embodiment, the processor 601 may include one or more CPUs. For example, the processor 601 includes CPU 0 and CPU 1 shown in FIG. 19.

The memory 602 may be a read-only memory (ROM) or a static storage device of any other type that may store static information and instructions, a random access memory (RAM) or a dynamic storage device of any other type that may store information and instructions, an electrically erasable programmable read-only memory (EEPROM), a magnetic disc storage medium or any other magnetic storage device, or any other medium that may be used to carry or store desired program codes in a form of instructions or data structures and that may be accessed by a computer, but is not limited thereto.

As a possible implementation, the memory 602 may exist independently of the processor 601, and the memory 602 may be connected to the processor 601 through the bus 603, and may be used for storing instructions or program codes. When the processor 601 calls and executes the instructions or program codes stored in the memory 602, the method for determining the parking frame provided in the embodiments of the present disclosure can be implemented.

In another possible implementation, the memory 602 and the processor 601 may be integrated together.

The bus 603 may be an industry standard architecture (ISA) bus, a peripheral component interconnect (PCI) bus, or an extended industry standard architecture (EISA) bus, etc. The bus may be divided into address bus, data bus, control bus, etc. For ease of representation, only one thick line is used in FIG. 19, but it does not mean that there is only one bus or one type of bus.

It should be noted that the structure shown in FIG. 19 does not limit the electronic device 60. In addition to the components shown in FIG. 19, the electronic device 60 may include more or fewer components than shown, or combine certain components, or have a different arrangement of components.

In some embodiments, the electronic device 60 provided in the embodiments of the present disclosure may further include a communication interface 604.

The communication interface 604 is used to connect with other devices through a communication network. The communication network may be an Ethernet, a wireless access network, a wireless local area network (WLAN), etc. The communication interface 604 may include a receiving unit for receiving data, and a sending unit for sending data.

In a design, in the electronic device 60 provided in the embodiments of the present disclosure, the communication interface may also be integrated in the processor.

In another hardware structure of the electronic device provided in the embodiments of the present disclosure, the electronic device may include a processor and a communication interface. The processor is coupled to the communication interface.

For functions of the processor, reference may be made to the description of the processor above. In addition, the processor also has a storage function, which can refer to the function of the memory.

The communication interface is used to provide data for the processor. The communication interface may be an internal interface of the communication device, or an external interface of the communication device.

It should be noted that, the another hardware structure does not constitute a limitation on the electronic device, and in addition to the components in the another hardware structure, the electronic device may include more or less components, or combine certain components, or have different component arrangements.

Embodiments of the present disclosure further provide a computer-readable storage medium. The computer-readable storage medium has stored instructions that, when executed by a computer, cause the computer to implement the steps in the method for determining the parking frame in the above-mentioned method embodiments. For example, the computer-readable storage medium is a non-transitory computer-readable storage media.

Embodiments of the present disclosure further provide a computer program product including instructions that, when run on a computer, cause the computer to execute the method for determining the parking frame in the above-mentioned method embodiments.

The computer-readable storage medium may be, for example, but not limited to, an electrical, magnetic, optical, electromagnetic, infrared, or semiconductor system, apparatus, device, or any combination thereof. More specific examples (non-exhaustive list) of the computer-readable storage media include: an electrical connection with one or more wires, a portable computer disk, a hard disk, a random access memory (RAM), a read-only memory (ROM), an erasable programmable read-only memory (EPROM), a register, an optical fiber, a portable compact disk read-only memory (CD-ROM ), an optical storage device, a magnetic storage device, or any suitable combination of the above, or any other form of computer-readable storage medium known in the art. An exemplary storage medium is coupled to the processor, so that the processor can read information from the storage medium, and write information into the storage medium. Of course, the storage medium may also be a component of the processor. The processor and the storage medium may be located in an application specific integrated circuit (ASIC). In the embodiments of the present disclosure, the computer-readable storage medium may be any tangible medium containing or storing a program, and the program may be used by or in combination with an instruction execution system, apparatus or device.

Since the electronic device, computer-readable storage media, and computer program product in the embodiments of the present disclosure may be applied to the above-mentioned methods, the obtained technical effects may also refer to the above-mentioned method embodiments, and details will not be repeated here.

The foregoing descriptions are merely specific implementations of the present disclosure, but the protection scope of the present disclosure is not limited thereto. Any change or replacement within the technical scope of the present disclosure shall be included in the protection scope of the present disclosure, which is defined by the appended claims.

## Claims

1. A method for determining a parking frame, used for determining the parking frame of a parking space for a vehicle (10), the vehicle (10) including an electronic rear-view mirror (11) and an around view monitor, AVM, (12), **characterized in that** the method comprises:
determining first far end coordinates based on a first image captured by the electronic rear-view mirror (11), the first far end coordinates being coordinates of a target far end point of the parking space in the first image; wherein the first image includes the target far end point;
obtaining second far end coordinates of the target far end point in a reference parking frame, wherein the reference parking frame is generated based on a second image obtained by the AVM (12), and the second image includes two near end points of the parking space and a portion of a parking line of the parking space;
adjusting the second far end coordinates according to the first far end coordinates to obtain third far end coordinates; and
determining a target parking frame of the parking space based on the third far end coordinates and coordinates of the two near end points of the reference parking frame;
wherein the target far end point and the two near end points are corner points of the parking frame, a distance between a corner point of the corner points and the vehicle is a vertical distance between an extension line of the corner point along a width direction of the parking frame and the vehicle;
wherein the reference parking frame is generated based on the second image obtained by the AVM (12) includes:
determining the coordinates of the two near end points based on positions of the two near end points in the second image and a preset depth estimation algorithm;
constructing the reference parking frame based on the coordinates of the two near end points, the portion of the parking line, and a preset fixed depth value;
wherein adjusting the second far end coordinates according to the first far end coordinates to obtain the third far end coordinates includes:
obtaining a first abscissa value of the first far end coordinates, a second abscissa value of the second far end coordinates, and an ordinate value of the first far end coordinates, the ordinate value being used to characterize a length of the parking space;
weighting the first abscissa value and the second abscissa value to obtain a third abscissa value, wherein a weight corresponding to the first abscissa value is greater than a weight corresponding to the second abscissa value; and
determining the third far end coordinates based on the third abscissa value and the ordinate value.

2. The method according to claim 1, **characterized in that** determining the target parking frame of the parking space based on the third far end coordinates and the coordinates of the two near end points of the reference parking frame includes:
determining a first parking line from the first image, the first parking line being a side parking line including the target far end point; wherein the first parking line is obtained by fitting based on the first far end coordinates, a coordinates of a first intermediate point, and a preset fitting algorithm; the first intermediate point is any point on the side parking line except the target far end point;
correcting, based on the first parking line, the coordinates of the two near end points of the reference parking frame to obtain corrected coordinates of the two near end points, wherein a second parking line formed by the corrected coordinates of the two near end points is perpendicular to the first parking line; and
determining the target parking frame of the parking space based on the third far end coordinates and the corrected coordinates of the two near end points.

3. The method according to claim 2, **characterized in that** correcting, based on the first parking line, the coordinates of the two near end points of the reference parking frame to obtain the corrected coordinates of the two near end points includes:
correcting a third parking line according to the first parking line to obtain the second parking line, the third parking line being a line segment including the two near end points of the reference parking frame;
determining, based on the third far end coordinates, corrected coordinates of a first near end point of the two near end points from the second parking line, wherein a line segment formed by the corrected coordinates of the first near end point and the third far end coordinates is perpendicular to the second parking line; and
determining coordinates of a near end point, farthest from the first parking line, of the second parking line as corrected coordinates of a second near end point of the two near end points.

4. The method according to claim 1, **characterized in that** the method further includes:
obtaining a parking pose of the vehicle (10) in the reference parking frame and a parking pose of the vehicle (10) in the target parking frame; and
controlling the vehicle (10) to park into the target parking frame in a case where the parking pose of the vehicle (10) in the reference parking frame and the parking pose of the vehicle (10) in the target parking frame meet a preset condition.

5. The method according to claim 4, **characterized in that** the parking pose of the vehicle (10) in the reference parking frame and the parking pose of the vehicle (10) in the target parking frame both include a parking angle and parking coordinates, and the preset condition includes a distance between parking coordinates of two parking poses being less than or equal to a preset distance threshold, and a difference between parking angles of the two parking poses being less than or equal to a preset angle threshold.

6. The method according to claim 1, **characterized in that** the method further includes:
determining a plurality of target parking frames;
obtaining a parking pose of the vehicle (10) in a first target parking frame and a parking pose of the vehicle (10) in a second target parking frame, the first target parking frame and the second target parking frame being different target parking frames in the plurality of target parking frames; and
controlling the vehicle (10) to park into a third target parking frame in a case where the parking pose of the vehicle (10) in the first target parking frame and the parking pose of the vehicle (10) in the second target parking frame meet a preset condition, the third target parking frame being any one of the plurality of target parking frames.

7. The method according to claim 6, **characterized in that** the parking pose of the vehicle (10) in the first target parking frame and the parking pose of the vehicle (10) in the second target parking frame both include a parking angle and parking coordinates, and the preset condition includes a distance between parking coordinates of two parking poses being less than or equal to a preset distance threshold, and a difference between parking angles of the two parking poses being less than or equal to a preset angle threshold.

8. A device (50) for determining a parking frame, used for determining the parking frame of a parking space for a vehicle (10), the vehicle (10) including an electronic rear-view mirror (11) and an around view monitor, AVM, (12), **characterized in that** the device (50) comprises: a determining unit (501), an obtaining unit (502) and an adjustment unit (503);
the determining unit (501) is used to determine first far end coordinates based on a first image captured by the electronic rear-view mirror (11), the first far end coordinates are coordinates of a target far end point of the parking space in the first image wherein the first image includes the target far end point;
the obtaining unit (502) is used to obtain second far end coordinates of the target far end point in a reference parking frame, wherein the reference parking frame is generated based on a second image obtained by the AVM (12), and the second image includes two near end points of the parking space and a portion of a parking line of the parking space;
the adjustment unit (503) is used to adjust the second far end coordinates according to the first far end coordinates to obtain third far end coordinates; and
the determining unit (501) is further used to determine a target parking frame of the parking space based on the third far end coordinates and coordinates of the two near end points of the reference parking frame;
wherein the target far end point and the two near end points are corner points of the parking frame, a distance between a corner point of the corner points and the vehicle is a vertical distance between an extension line of the corner point along a width direction of the parking frame and the vehicle;
wherein the reference parking frame is generated based on the second image obtained by the AVM (12) includes:
determining the coordinates of the two near end points based on positions of the two near end points in the second image and a preset depth estimation algorithm;
constructing the reference parking frame based on the coordinates of the two near end points, the portion of the parking line, and a preset fixed depth value;
wherein the adjustment unit (503) is used to: obtain a first abscissa value of the first far end coordinates, a second abscissa value of the second far end coordinates, and an ordinate value of the first far end coordinates, the ordinate value being used to characterize a length of the parking space; weight the first abscissa value and the second abscissa value to obtain a third abscissa value, wherein a weight corresponding to the first abscissa value is greater than a weight corresponding to the second abscissa value; and determine the third far end coordinates based on the third abscissa value and the ordinate value.

9. The device (50) according to claim 8, **characterized in that** the determining unit (501) is used to: determine a first parking line from the first image, the first parking line being a side parking line including the target far end point; wherein the first parking line is obtained by fitting based on the first far end coordinates, a coordinates of a first intermediate point, and a preset fitting algorithm; the first intermediate point is any point on the side parking line except the target far end point; correct, based on the first parking line, the coordinates of the two near end points of the reference parking frame to obtain corrected coordinates of the two near end points, wherein a second parking line formed by the corrected coordinates of the two near end points is perpendicular to the first parking line; and determine the target parking frame of the parking space based on the third far end coordinates and the corrected coordinates of the two near end points.

10. The device (50) according to claim 9, **characterized in that** the determining unit (501) is used to: correct a third parking line according to the first parking line to obtain the second parking line, the third parking line being a line segment including the two near end points of the reference parking frame; determine, based on the third far end coordinates, corrected coordinates of a first near end point of the two near end points from the second parking line, wherein a line segment formed by the corrected coordinates of the first near end point and the third far end coordinates is perpendicular to the second parking line; and determine coordinates of a near end point, farthest from the first parking line, of the second parking line as corrected coordinates of a second near end point of the two near end points.

11. The device (50) according to claim 8, **characterized in that** the device (50) further comprises a controlling unit (504), wherein
the obtaining unit (502) is further used to obtain a parking pose of the vehicle (10) in the reference parking frame and a parking pose of the vehicle (10) in the target parking frame; and
the controlling unit (504) is used to control the vehicle (10) to park into the target parking frame in a case where the parking pose of the vehicle (10) in the reference parking frame and the parking pose of the vehicle (10) in the target parking frame meet a preset condition.

12. An electronic device (60), **characterized by** comprising a processor (601) and a communication interface (604), wherein the communication interface (604) is coupled to the processor (601), and the processor (601) is used to run computer programs or instructions to implement the method for determining the parking frame according to any one of claims 1 to 7.

13. A computer-readable storage medium, **characterized in that** the computer-readable storage medium has stored instructions that, when executed by a computer, cause the computer to implement the method for determining the parking frame according to any one of claims 1 to 7.

## Patentansprüche

1. Verfahren zum Bestimmen eines Parkrahmens, das zum Bestimmen des Parkrahmens eines Parkraums für ein Fahrzeug (10) verwendet wird, wobei das Fahrzeug (10) einen elektronischen Rückspiegel (11) und einen Rundumsichtspiegel (Around View Mirror), AVM, (12) umfasst, **dadurch gekennzeichnet, dass** das Verfahren umfasst:
Bestimmen von ersten Koordinaten des fernen Endes auf der Grundlage eines ersten Bildes, das von dem elektronischen Rückspiegel (11) aufgenommen wird, wobei die ersten Koordinaten des fernen Endes Koordinaten eines Zielpunkts am fernen Ende des Parkraums in dem ersten Bild sind; wobei das erste Bild den Zielpunkt am fernen Ende umfasst;
Erhalten von zweiten Koordinaten des fernen Endes des Zielpunkts am fernen Ende in einem Referenzparkrahmen, wobei der Referenzparkrahmen auf der Grundlage eines zweiten Bildes erzeugt wird, das durch den AVM (12) erhalten wird, und das zweite Bild zwei nahe Endpunkte des Parkraums und einen Abschnitt einer Parklinie des Parkraums umfasst;
Anpassen der zweiten Koordinaten des fernen Endes gemäß den ersten Koordinaten des fernen Endes, um dritte Koordinaten des fernen Endes zu erhalten; und
Bestimmen eines Zielparkrahmens des Parkraums auf der Grundlage der dritten Koordinaten des fernen Endes und Koordinaten der zwei nahen Endpunkte des Referenzparkrahmens;
wobei der Zielpunkt am fernen Ende und die zwei nahen Endpunkte Eckpunkte des Parkrahmens sind, ein Abstand zwischen einem Eckpunkt der Eckpunkte und dem Fahrzeug ein vertikaler Abstand zwischen einer Erstreckungslinie des Eckpunkts entlang einer Breitenrichtung des Parkrahmens und dem Fahrzeug ist;
wobei das Erzeugen des Referenzparkrahmens auf der Grundlage des zweiten Bildes, das durch den AVM (12) erhalten wird, umfasst:
Bestimmen der Koordinaten der zwei nahen Endpunkte auf der Grundlage von Positionen der zwei nahen Endpunkte in dem zweiten Bild und eines voreingestellten Tiefenschätzungsalgorithmus;
Konstruieren des Referenzparkrahmens auf der Grundlage der Koordinaten der zwei nahen Endpunkte, des Abschnitts der Parklinie und eines voreingestellten festen Tiefenwerts;
wobei das Anpassen der Koordinaten des zweiten fernen Endes gemäß den ersten Koordinaten des fernen Endes, um die dritten Koordinaten des fernen Endes zu erhalten, umfasst:
Erhalten eines ersten Abszissenwerts der ersten Koordinaten des fernen Endes, eines zweiten Abszissenwerts der zweiten Koordinaten des fernen Endes und eines Ordinatenwerts der ersten Koordinaten des fernen Endes, wobei der Ordinatenwert zum Kennzeichnen einer Länge des Parkraums verwendet wird;
Gewichten des ersten Abszissenwerts und des zweiten Abszissenwerts, um einen dritten Abszissenwert zu erhalten, wobei ein Gewicht, das dem ersten Abszissenwert entspricht, größer als ein Gewicht ist, das dem zweiten Abszissenwert entspricht; und
Bestimmen der dritten Koordinaten des fernen Endes auf der Grundlage des dritten Abszissenwerts und des Ordinatenwerts.

2. Verfahren nach Anspruch 1, **dadurch gekennzeichnet, dass** das Bestimmen des Zielparkrahmens des Parkraums auf der Grundlage der dritten Koordinaten des fernen Endes und der Koordinaten der zwei nahen Endpunkte des Referenzparkrahmens umfasst:
Bestimmen einer ersten Parklinie von dem ersten Bild, wobei die erste Parklinie eine Seitenparklinie ist, die den Zielpunkt am fernen Ende umfasst; wobei die erste Parklinie durch Anpassen, auf der Grundlage der ersten Koordinaten des fernen Endes, einer Koordinate eines ersten Zwischenpunkts und eines voreingestellten Anpassungsalgorithmus erhalten wird; der erste Zwischenpunkt ein beliebiger Punkt auf der Seitenparklinie außer der Zielpunkt am fernen Ende ist;
Korrigieren, auf der Grundlage der ersten Parklinie, der Koordinaten der zwei nahen Endpunkte des Referenzparkrahmens, um korrigierte Koordinaten der zwei nahen Endpunkte zu erhalten, wobei eine zweite Parklinie, die von den korrigierten Koordinaten der zwei nahen Endpunkte gebildet wird, senkrecht zur ersten Parklinie ist; und
Bestimmen des Zielparkrahmens des Parkraums auf der Grundlage der dritten Koordinaten des fernen Endes und der korrigierten Koordinaten der zwei nahen Endpunkte.

3. Verfahren nach Anspruch 2, **dadurch gekennzeichnet, dass** das Korrigieren, auf der Grundlage der ersten Parklinie, der Koordinaten der zwei nahen Endpunkte des Referenzparkrahmens, um die korrigierten Koordinaten der zwei nahen Endpunkte zu erhalten, umfasst:
Korrigieren einer dritten Parklinie gemäß der ersten Parklinie, um die zweite Parklinie zu erhalten, wobei die dritte Parklinie ein Liniensegment ist, das die zwei nahen Endpunkte des Referenzparkrahmens umfasst;
Bestimmen, auf der Grundlage der dritten Koordinaten des fernen Endes, von korrigierten Koordinaten eines ersten nahen Endpunkts von den zwei nahen Endpunkten von der zweiten Parklinie, wobei ein Liniensegment, das von den korrigierten Koordinaten des ersten nahen Endpunkts und den dritten Koordinaten des fernen Endes gebildet wird, senkrecht zur zweiten Parklinie ist; und
Bestimmen von Koordinaten eines nahen Endpunkts, der am entferntesten von der ersten Parklinie liegt, der zweiten Parklinie als korrigierte Koordinaten eines zweiten nahen Endpunkts von den zwei nahen Endpunkten.

4. Verfahren nach Anspruch 1, **dadurch gekennzeichnet, dass** das Verfahren ferner umfasst:
Erhalten einer Parkpose des Fahrzeugs (10) in dem Referenzparkrahmen und einer Parkpose des Fahrzeugs (10) in dem Zielparkrahmen; und
Steuern des Fahrzeugs (10), um in dem Zielparkrahmen in einem Fall zu parken, in dem die Parkpose des Fahrzeugs (10) in dem Referenzparkrahmen und die Parkpose des Fahrzeugs (10) in dem Zielparkrahmen eine voreingestellte Bedingung erfüllen.

5. Verfahren nach Anspruch 4, **dadurch gekennzeichnet, dass** die Parkpose des Fahrzeugs (10) im Referenzparkrahmen und die Parkpose des Fahrzeugs (10) im Zielparkrahmen beide einen Parkwinkel und Parkkoordinaten umfassen und die voreingestellte Bedingung umfasst, dass ein Abstand zwischen Parkkoordinaten von zwei Parkposen kleiner oder gleich einem voreingestellten Abstandsschwellenwert ist und eine Differenz zwischen Parkwinkeln der zwei Parkposen kleiner oder gleich einem voreingestellten Winkelschwellenwert ist.

6. Verfahren nach Anspruch 1, **dadurch gekennzeichnet, dass** das Verfahren ferner umfasst:
Bestimmen einer Vielzahl von Zielparkrahmen;
Erhalten einer Parkpose des Fahrzeugs (10) in einem ersten Zielparkrahmen und einer Parkpose des Fahrzeugs (10) in einem zweiten Zielparkrahmen, wobei der erste Zielparkrahmen und der zweite Zielparkrahmen unterschiedliche Zielparkrahmen in den mehreren Parkrahmen sind; und
Steuern des Fahrzeugs (10), um in einem dritten Parkrahmen zu parken, in einem Fall, in dem die Parkpose des Fahrzeugs (10) im ersten Zielparkrahmen und die Parkpose des Fahrzeugs (10) im zweiten Zielparkrahmen eine voreingestellte Bedingung erfüllen, wobei der dritte Zielparkrahmen ein beliebiger von der Vielzahl von Zielparkrahmen ist.

7. Verfahren nach Anspruch 6, **dadurch gekennzeichnet, dass** die Parkpose des Fahrzeugs (10) im ersten Zielparkrahmen und die Parkpose des Fahrzeugs (10) im zweiten Zielparkrahmen beide einen Parkwinkel und Parkkoordinaten umfassen, und die voreingestellte Bedingung umfasst, dass ein Abstand zwischen Parkkoordinaten von zwei Parkposen kleiner oder gleich einem voreingestellten Abstandsschwellenwert ist und eine Differenz zwischen Parkwinkeln der zwei Parkposen kleiner oder gleich einem voreingestellten Winkelschwellenwert ist.

8. Vorrichtung (50) zum Bestimmen eines Parkrahmens, der zum Bestimmen des Parkrahmens eines Parkraums für ein Fahrzeug (10) verwendet wird, wobei das Fahrzeug (10) einen elektronischen Rückspiegel (11) und einen Rundumsichtspiegel (Around View Mirror), AVM, (12) umfasst, **dadurch gekennzeichnet, dass** die Vorrichtung (50) umfasst: eine Bestimmungseinheit (501), eine Erhalteeinheit (502) und eine Anpassungseinheit (503);
die Bestimmungseinheit (501) verwendet wird zum Bestimmen von ersten Koordinaten des fernen Endes auf der Grundlage eines ersten Bildes, das von dem elektronischen Rückspiegel (11) aufgenommen wird, wobei die ersten Koordinaten des fernen Endes Koordinaten eines Zielpunkts am fernen Ende des Parkraums in dem ersten Bild sind, wobei das erste Bild den Zielpunkt am fernen Ende umfasst;
die Erhalteeineit (502) verwendet wird zum Erhalten von zweiten Koordinaten des fernen Endes des Zielpunkts am fernen Ende in einem Referenzparkrahmen, wobei der Referenzparkrahmen auf der Grundlage eines zweiten Bildes erzeugt wird, das durch den AVM (12) erhalten wird, und das zweite Bild zwei nahe Endpunkte des Parkraums und einen Abschnitt einer Parklinie des Parkraums umfasst;
die Anpassungseinheit (503) verwendet wird zum Anpassen der zweiten Koordinaten des fernen Endes gemäß den ersten Koordinaten des fernen Endes, um dritte Koordinaten des fernen Endes zu erhalten; und
die Bestimmungseinheit (501) ferner verwendet wird zum Bestimmen eines Zielparkrahmens des Parkraums auf der Grundlage der dritten Koordinaten des fernen Endes und Koordinaten der zwei nahen Endpunkte des Referenzparkrahmens;
wobei der Zielpunkt am fernen Ende und die zwei nahen Endpunkte Eckpunkte des Parkrahmens sind, ein Abstand zwischen einem Eckpunkt der Eckpunkte und dem Fahrzeug ein vertikaler Abstand zwischen einer Erstreckungslinie des Eckpunkts entlang einer Breitenrichtung des Parkrahmens und dem Fahrzeug ist;
wobei das Erzeugen des Referenzparkrahmens auf der Grundlage des zweiten Bildes, das von dem AVM (12) erhalten wird, umfasst:
Bestimmen der Koordinaten der zwei nahen Endpunkte auf der Grundlage von Positionen der zwei nahen Endpunkte in dem zweiten Bild und eines voreingestellten Tiefenschätzungsalgorithmus;
Konstruieren des Referenzparkrahmens auf der Grundlage der Koordinaten der zwei nahen Endpunkte, des Abschnitts der Parklinie und eines voreingestellten festen Tiefenwerts;
wobei die Anpassungseinheit (503) verwendet wird zum: Erhalten eines ersten Abszissenwerts der ersten Koordinaten des fernen Endes, eines zweiten Abszissenwerts der zweiten Koordinaten des fernen Endes und eines Ordinatenwerts der ersten Koordinaten des fernen Endes, wobei der Ordinatenwert zum Kennzeichnen einer Länge des Parkraums verwendet wird; Gewichten des ersten Abszissenwerts und des zweiten Abszissenwerts, um einen dritten Abszissenwert zu erhalten, wobei ein Gewicht, das dem ersten Abszissenwert entspricht, größer als ein Gewicht ist, das dem zweiten Abszissenwert entspricht; und Bestimmen der dritten Koordinaten des fernen Endes auf der Grundlage des dritten Abszissenwerts und des Ordinatenwerts.

9. Vorrichtung (50) nach Anspruch 8, **dadurch gekennzeichnet, dass** die Bestimmungseinheit (501) verwendet wird zum: Bestimmen einer ersten Parklinie von dem ersten Bild, wobei die erste Parklinie eine Seitenparklinie ist, die den Zielpunkt am fernen Ende umfasst; wobei die erste Parklinie durch Anpassen, auf der Grundlage der ersten Koordinaten des fernen Endes, einer Koordinate eines ersten Zwischenpunkts und eines voreingestellten Anpassungsalgorithmus erhalten wird; der erste Zwischenpunkt ein beliebiger Punkt auf der Seitenparklinie außer der Zielpunkt am fernen Ende ist; Korrigieren, auf der Grundlage der ersten Parklinie, der Koordinaten der zwei nahen Endpunkte des Referenzparkrahmens, um korrigierte Koordinaten der zwei nahen Endpunkte zu erhalten, wobei eine zweite Parklinie, die von den korrigierten Koordinaten der zwei nahen Endpunkte gebildet wird, senkrecht zur ersten Parklinie ist; und Bestimmen des Zielparkrahmens des Parkraums auf der Grundlage der dritten Koordinaten des fernen Endes und der korrigierten Koordinaten der zwei nahen Endpunkte.

10. Vorrichtung (50) nach Anspruch 9, **dadurch gekennzeichnet, dass** die Bestimmungseinheit (501) verwendet wird zum: Korrigieren einer dritten Parklinie gemäß der ersten Parklinie, um die zweite Parklinie zu erhalten, wobei die dritte Parklinie ein Liniensegment ist, das die zwei nahen Endpunkte des Referenzparkrahmens umfasst; Bestimmen, auf der Grundlage der dritten Koordinaten des fernen Endes, von korrigierten Koordinaten eines ersten nahen Endpunkts von den zwei nahen Endpunkten von der zweiten Parklinie, wobei ein Liniensegment, das von den korrigierten Koordinaten des ersten nahen Endpunkts und den dritten Koordinaten des fernen Endes gebildet wird, senkrecht zur zweiten Parklinie ist; und Bestimmen von Koordinaten eines nahen Endpunkts, der am entferntesten von der ersten Parklinie liegt, der zweiten Parklinie als korrigierte Koordinaten eines zweiten nahen Endpunkts von den zwei nahen Endpunkten.

11. Vorrichtung (50) nach Anspruch 8, **dadurch gekennzeichnet, dass** die Vorrichtung (50) ferner eine Steuereinheit (504) umfasst, wobei
die Erhalteeinheit (502) ferner verwendet wird zum Erhalten einer Parkpose des Fahrzeugs (10) in dem Referenzparkrahmen und einer Parkpose des Fahrzeugs (10) in dem Zielparkrahmen; und
die Steuereinheit (504) verwendet wird zum Steuern des Fahrzeugs (10), um in dem Zielparkrahmen in einem Fall zu parken, in dem die Parkpose des Fahrzeugs (10) in dem Referenzparkrahmen und die Parkpose des Fahrzeugs (10) in dem Zielparkrahmen eine voreingestellte Bedingung erfüllen.

12. Elektronische Vorrichtung (60), **dadurch gekennzeichnet, dass** sie einen Prozessor (601) und eine Kommunikationsschnittstelle (604) umfasst, wobei die Kommunikationsschnittstelle (604) an den Prozessor (601) gekoppelt ist und der Prozessor (601) zum Ausführen von Computerprogrammen oder Anweisungen zum Implementieren des Verfahrens zur Bestimmung des Parkrahmens nach einem der Ansprüche 1 bis 7 verwendet wird.

13. Computerlesbares Speichermedium, **dadurch gekennzeichnet, dass** das computerlesbare Speichermedium gespeicherte Anweisungen aufweist, die, wenn sie von einem Computer ausgeführt werden, den Computer veranlassen, das Verfahren zur Bestimmung des Parkrahmens nach einem der Ansprüche 1 bis 7 zu implementieren.

## Revendications

1. Procédé de détermination d'un cadre de stationnement, utilisé pour déterminer le cadre de stationnement d'une place de stationnement pour un véhicule (10), le véhicule (10) incluant un rétroviseur électronique (11) et un écran de visualisation du périmètre, AVM, (12), **caractérisé en ce que** le procédé comprend :
la définition de premières coordonnées d'extrémité éloignée sur la base d'une première image capturée par le rétroviseur électronique (11), les premières coordonnées d'extrémité éloignée étant des coordonnées d'un point d'extrémité éloignée cible de la place de stationnement dans la première image ; dans lequel la première image inclut le point d'extrémité éloignée cible ;
l'obtention de deuxièmes coordonnées d'extrémité éloignée du point d'extrémité éloignée cible dans un cadre de stationnement de référence, dans lequel le cadre de stationnement de référence est généré sur la base d'une deuxième image obtenue par l'AVM (12), et la deuxième image inclut deux points d'extrémité proche de la place de stationnement et une partie d'une ligne de stationnement de la place de stationnement ;
l'ajustement des deuxièmes coordonnées d'extrémité éloignée en fonction des premières coordonnées d'extrémité éloignée pour obtenir des troisièmes coordonnées d'extrémité éloignée ; et
la détermination d'un cadre de stationnement cible de la place de stationnement sur la base des troisièmes coordonnées d'extrémité éloignée et des coordonnées des deux points d'extrémité proche du cadre de stationnement de référence ;
dans lequel le point d'extrémité éloignée cible et les deux points d'extrémité proche sont des points de coin du cadre de stationnement, une distance entre un point de coin parmi les points de coin et le véhicule est une distance verticale entre une ligne d'extension du point de coin le long d'une direction de largeur du cadre de stationnement et le véhicule ;
dans lequel le cadre de stationnement de référence est généré sur la base de la deuxième image obtenue par l'AVM (12) inclut :
la détermination des coordonnées des deux points d'extrémité proche sur la base de positions des deux points d'extrémité proche dans la deuxième image et d'un algorithme d'estimation de profondeur prédéfini ;
la construction du cadre de stationnement de référence sur la base des coordonnées des deux points d'extrémité proche, de la partie de la ligne de stationnement, et d'une valeur de profondeur fixe prédéfinie ;
dans lequel l'ajustement des deuxièmes coordonnées d'extrémité éloignée en fonction des premières coordonnées d'extrémité éloignée pour obtenir les troisièmes coordonnées d'extrémité éloignée inclut :
l'obtention d'une première valeur d'abscisse des premières coordonnées d'extrémité éloignée, d'une deuxième valeur d'abscisse des deuxièmes valeurs d'extrémité éloignée, et d'une valeur d'ordonnée des premières coordonnées d'extrémité éloignée, la valeur d'ordonnée étant utilisée pour caractériser une longueur de la place de stationnement ;
la pondération de la première valeur d'abscisse et de la deuxième valeur d'abscisse pour obtenir une troisième valeur d'abscisse, dans lequel un poids correspondant à la première valeur d'abscisse est supérieur à un poids correspondant à la deuxième valeur d'abscisse ; et
la détermination des troisièmes coordonnées d'extrémité éloignée sur la base de la troisième valeur d'abscisse et de la valeur d'ordonnée.

2. Procédé selon la revendication 1, **caractérisé en ce que** la détermination du cadre de stationnement cible de la place de stationnement sur la base des troisièmes coordonnées d'extrémité éloignée et des coordonnées des deux points d'extrémité proche du cadre de stationnement de référence inclut :
la détermination d'une première ligne de stationnement à partir de la première image, la première ligne de stationnement étant une ligne de stationnement latérale incluant le point d'extrémité éloignée cible ; dans lequel la première ligne de stationnement est obtenue par adaptation sur la base des premières coordonnées d'extrémité éloignée, des coordonnées d'un premier point intermédiaire et d'un algorithme d'adaptation prédéfini ; le premier point intermédiaire est n'importe quel point sur la ligne de stationnement latérale à l'exception du point d'extrémité éloignée cible ;
la correction, sur la base de la première ligne de stationnement, des coordonnées des deux points d'extrémité proche du cadre de stationnement de référence pour obtenir des coordonnées corrigées des deux points d'extrémité proche, dans lequel une deuxième ligne de stationnement formée par les coordonnées corrigées des deux points d'extrémité proche est perpendiculaire à la première ligne de stationnement ; et
la détermination du cadre de stationnement cible de la place de stationnement sur la base des troisièmes coordonnées d'extrémité éloignée et des coordonnées corrigées des deux points d'extrémité proche.

3. Procédé selon la revendication 2, **caractérisé en ce que** la correction, sur la base de la première ligne de stationnement, des coordonnées des deux points d'extrémité proche du cadre de stationnement de référence pour obtenir les coordonnées corrigées des deux points d'extrémité proche inclut :
la correction d'une troisième ligne de stationnement en fonction de la première ligne de stationnement pour obtenir la deuxième ligne de stationnement, la troisième ligne de stationnement étant un segment de ligne incluant les deux points d'extrémité proche du cadre de stationnement de référence ;
la détermination, sur la base des troisièmes coordonnées d'extrémité éloignée, de coordonnées corrigées d'un premier point d'extrémité proche parmi les deux points d'extrémité proche à partir de la deuxième ligne de stationnement, dans lequel un segment de ligne formé par les coordonnées corrigées du premier point d'extrémité proche et les troisièmes coordonnées d'extrémité éloignée est perpendiculaire à la deuxième ligne de stationnement ; et
la détermination de coordonnées d'un point d'extrémité proche, qui est le plus éloigné de la première ligne de stationnement, de la deuxième ligne de stationnement en tant que coordonnées corrigées d'un deuxième point d'extrémité proche parmi les deux points d'extrémité proche.

4. Procédé selon la revendication 1, **caractérisé en ce que** le procédé inclut en outre :
l'obtention d'une pose de stationnement du véhicule (10) dans le cadre de stationnement de référence et d'une pose de stationnement du véhicule (10) dans le cadre de stationnement cible ; et
la commande au véhicule (10) de stationner dans le cadre de stationnement cible dans un cas où la pose de stationnement du véhicule (10) dans le cadre de stationnement de référence et la pose de stationnement du véhicule (10) dans le cadre de stationnement cible remplissent une condition prédéfinie.

5. Procédé selon la revendication 4, **caractérisé en ce qu'**à la fois la pose de stationnement du véhicule (10) dans le cadre de stationnement de référence et la pose de stationnement du véhicule (10) dans le cadre de stationnement cible incluent un angle de stationnement et des coordonnées de stationnement, et la condition prédéfinie inclut qu'une distance entre des coordonnées de stationnement de deux pauses de stationnement soit inférieure ou égale à un seuil de distance prédéfini, et qu'une différence entre des angles de stationnement des deux poses de stationnement soit inférieure ou égale à un seuil d'angle prédéfini.

6. Procédé selon la revendication 1, **caractérisé en ce que** le procédé inclut en outre :
la détermination d'une pluralité de cadres de stationnement cible ;
l'obtention d'une pose de stationnement du véhicule (10) dans un premier cadre de stationnement cible et d'une pose de stationnement du véhicule (10) dans un deuxième cadre de stationnement cible, le premier cadre de stationnement cible et le deuxième cadre de stationnement cible étant des cadres de stationnement cible différents parmi la pluralité de cadres de stationnement cible ; et
la commande au véhicule (10) de stationner dans un troisième cadre de stationnement cible dans un cas où la pose de stationnement du véhicule (10) dans le premier cadre de stationnement cible et la pose de stationnement du véhicule (10) dans le deuxième cadre de stationnement cible remplissent une condition prédéfinie, le troisième cadre de stationnement cible étant n'importe lequel de la pluralité de cadres de stationnement cible.

7. Procédé selon la revendication 6, **caractérisé en ce qu'**à la fois la pose de stationnement du véhicule (10) dans le premier cadre de stationnement cible et la pose de stationnement du véhicule (10) dans le deuxième cadre de stationnement cible incluent un angle de stationnement et des coordonnées de stationnement, et la condition prédéfinie inclut qu'une distance entre des coordonnées de stationnement de deux poses de stationnement soit inférieure ou égale à un seuil de distance prédéfini, et qu'une différence entre des angles de stationnement des deux poses de stationnement soit inférieure ou égale à un seuil d'angle prédéfini.

8. Dispositif (50) de détermination d'un cadre de stationnement, utilisé pour déterminer le cadre de stationnement d'une place de stationnement pour un véhicule (10), le véhicule (10) incluant un rétroviseur électronique (11) et un écran de visualisation du périmètre, AVM, (12), **caractérisé en ce que** le dispositif (50) comprend : une unité de détermination (501), une unité d'obtention (502) et une unité d'ajustement (503) ;
l'unité de détermination (501) est utilisée pour déterminer des premières coordonnées d'extrémité éloignée sur la base d'une première image capturée par le rétroviseur électronique (11), les premières coordonnées d'extrémité éloignée sont des coordonnées d'un point d'extrémité éloignée cible de la place de stationnement dans la première image, dans lequel la première image inclut le point d'extrémité éloignée cible ;
l'unité d'obtention (502) est utilisée pour obtenir des deuxièmes coordonnées d'extrémité éloignée du point d'extrémité éloignée cible dans un cadre de stationnement de référence, dans lequel le cadre de stationnement de référence est généré sur la base d'une deuxième image obtenue par l'AVM (12), et la deuxième image inclut deux points d'extrémité proche de la place de stationnement et une partie d'une ligne de stationnement de la place de stationnement ;
l'unité d'ajustement (503) est utilisée pour ajuster les deuxièmes coordonnées d'extrémité éloignée en fonction des premières coordonnées d'extrémité éloignée pour obtenir des troisièmes coordonnées d'extrémité éloignée ; et
l'unité de détermination (501) est en outre utilisée pour déterminer un cadre de stationnement cible de la place de stationnement sur la base des troisièmes coordonnées d'extrémité éloignée et des coordonnées des deux points d'extrémité proche du cadre de stationnement de référence ;
dans lequel le point d'extrémité éloignée cible et les deux points d'extrémité proche sont des points de coin du cadre de stationnement, une distance entre un point de coin parmi les points de coin et le véhicule est une distance verticale entre une ligne d'extension du point de coin le long d'une direction de largeur du cadre de stationnement et le véhicule ;
dans lequel le cadre de stationnement de référence est généré sur la base de la deuxième image obtenue par l'AVM (12) inclut :
la détermination des coordonnées des deux points d'extrémité proche sur la base de positions des deux points d'extrémité proche dans la deuxième image et d'un algorithme d'estimation de profondeur prédéfini ;
la construction du cadre de stationnement de référence sur la base des coordonnées des deux points d'extrémité proche, de la partie de la ligne de stationnement, et d'une valeur de profondeur fixe prédéfinie ;
dans lequel l'unité d'ajustement (503) est utilisée pour : obtenir une première valeur d'abscisse des premières coordonnées d'extrémité éloignée, une deuxième valeur d'abscisse des deuxièmes valeurs d'extrémité éloignée, et une valeur d'ordonnée des premières coordonnées d'extrémité éloignée, la valeur d'ordonnée étant utilisée pour caractériser une longueur de la place de stationnement ; pondérer la première valeur d'abscisse et la deuxième valeur d'abscisse pour obtenir une troisième valeur d'abscisse, dans lequel un poids correspondant à la première valeur d'abscisse est supérieur à un poids correspondant à la deuxième valeur d'abscisse ; et déterminer les troisièmes coordonnées d'extrémité éloignée sur la base de la troisième valeur d'abscisse et de la valeur d'ordonnée.

9. Dispositif (50) selon la revendication 8, **caractérisé en ce que** l'unité de détermination (501) est utilisée pour : déterminer une première ligne de stationnement à partir de la première image, la première ligne de stationnement étant une ligne de stationnement latérale incluant le point d'extrémité éloignée cible ; dans lequel la première ligne de stationnement est obtenue par adaptation sur la base des premières coordonnées d'extrémité éloignée, des coordonnées d'un premier point intermédiaire et d'un algorithme d'adaptation prédéfini ; le premier point intermédiaire est n'importe quel point sur la ligne de stationnement latérale à l'exception du point d'extrémité éloignée cible ; corriger, sur la base de la première ligne de stationnement, les coordonnées des deux points d'extrémité proche du cadre de stationnement de référence pour obtenir des coordonnées corrigées des deux points d'extrémité proche, dans lequel une deuxième ligne de stationnement formée par les coordonnées corrigées des deux points d'extrémité proche est perpendiculaire à la première ligne de stationnement ; et déterminer le cadre de stationnement cible de la place de stationnement sur la base des troisièmes coordonnées d'extrémité éloignée et des coordonnées corrigées des deux points d'extrémité proche.

10. Dispositif (50) selon la revendication 9, **caractérisé en ce que** l'unité de détermination (501) est utilisée pour : corriger une troisième ligne de stationnement en fonction de la première ligne de stationnement pour obtenir la deuxième ligne de stationnement, la troisième ligne de stationnement étant un segment de ligne incluant les deux points d'extrémité proche du cadre de stationnement de référence ; déterminer, sur la - base des troisièmes coordonnées d'extrémité éloignée, des coordonnées corrigées d'un premier point d'extrémité proche parmi les deux points d'extrémité proche à partir de la deuxième ligne de stationnement, dans lequel un segment de ligne formé par les coordonnées corrigées du premier point d'extrémité proche et les troisièmes coordonnées d'extrémité éloignée est perpendiculaire à la deuxième ligne de stationnement ; et déterminer des coordonnées d'un point d'extrémité proche, qui est le plus éloigné de la première ligne de stationnement, de la deuxième ligne de stationnement en tant que coordonnées corrigées d'un deuxième point d'extrémité proche parmi les deux points d'extrémité proche.

11. Dispositif (50) selon la revendication 8, **caractérisé en ce que** le dispositif (50) comprend en outre une unité de commande (504), dans lequel
l'unité d'obtention (502) est en outre utilisée pour obtenir une pose de stationnement du véhicule (10) dans le cadre de stationnement de référence et une pose de stationnement du véhicule (10) dans le cadre de stationnement cible ; et
l'unité de commande (504) est utilisée pour commander au véhicule (10) de stationner dans le cadre de stationnement cible dans un cas où la pose de stationnement du véhicule (10) dans le cadre de stationnement de référence et la pose de stationnement du véhicule (10) dans le cadre de stationnement cible remplissent une condition prédéfinie.

12. Dispositif électronique (60), **caractérisé en ce qu'**il comprend un processeur (601) et une interface de communication (604), dans lequel l'interface de communication (604) est couplée au processeur (601), et le processeur (601) est utilisé pour exécuter des programmes informatiques ou des instructions pour mettre en œuvre le procédé de détermination du cadre de stationnement selon l'une quelconque des revendications 1 à 7.

13. Support de stockage lisible par ordinateur, **caractérisé en ce que** le support de stockage lisible par ordinateur stocke des instructions qui, lorsqu'elles sont exécutées par un ordinateur, amènent l'ordinateur à mettre en œuvre le procédé de détermination du cadre de stationnement selon l'une quelconque des revendications 1 à 7.
